# EUROPEAN PATENT APPLICATION

(11) **EP 4 822 208 A1**
(43) Date of publication of application: **14.10.2026**
(21) Application number: 25169573.0
(22) Date of filing: 09.04.2025
(51) Int. Cl.: F16F 1/393, F16F 1/38

(54) **ELASTOMER BUSH**

(71) Applicant: Vibracoustic SE, 69469 Weinheim (DE)
(72) Inventor: Trimoreau, Franck, 44300 Nantes (FR); Praud, Stefen, 44000 Nantes (FR)
(74) Representative: Patentanwälte Olbricht Buchhold Keulertz

(57) **Abstract**

A Elastomer bush (2) comprising a longitudinal axis (A),a core (100), an outer sleeve (200) surrounding said core (100) and an elastomer body (300) arranged between said core (100) and said sleeve (200) and elastically connecting said core (100) and said sleeve (200) to each other, wherein the elastomer body (300) forms an elastomer support ring (302) which is supported on its inner circumference at an inner support surface (106) of the core (100) and on its outer circumference at an outer support surface (206) of the outer sleeve (200), wherein the elastomer support ring (302) is a hollow truncated cone.

## Description

The invention relates to an elastomer bush according to claim 1.

Elastomer bushes are known comprising a core, an outer sleeve surrounding said core and an elastomer body arranged between said core and said sleeve to elastically connect both of said core and said sleeve to each other. However, known bushings do not have a satisfactory ratio between axial stiffness and radial stiffness.

The task is to find an elastomer bush that enables high axial stiffness regardless of torsional deflection.

Main features of the invention are given in claim 1. Embodiments are the subject of claims 2 to 12 and the disclosed embodiments.

The invention relates to an elastomer bush comprising a longitudinal axis, a core, an outer sleeve surrounding said core and an elastomer body arranged between said core and said sleeve and elastically connecting said core and said outer sleeve to each other. The elastomer body forms an elastomer support ring which is supported on its inner circumference at an inner support surface of the core and on its outer circumference at an outer support surface of the outer sleeve, wherein the elastomer support ring is a hollow truncated cone or is in the shape of a hollow truncated cone.

The elastomer support ring being a hollow truncated cone enables high axial stiffness regardless of torsional deflection between the core and the sleeve. Moreover, said elastomer support ring being a hollow truncated cone enables withstanding high axial preloads and has a high axial stiffness even under preload. For example, if the core is rotated slightly relative to the outer sleeve, the arrangement remains axially aligned. Therefore, the axial stiffness does not drop with torsional deflection. Furthermore, as the ring has a large circumferential length, it can achieve a relatively high increase in axial stiffness. This is particularly true in comparison to known elastomeric arms, which are supported between the core and the outer sleeve and, due to their short circumferential length, can neither achieve high axial stiffness nor remain sufficient axial stiffness under torsional deflection.

The elastomer support ring can be continuous or uninterrupted in the circumferential direction around the longitudinal axis. The elastomer support ring can be a rotational body with respect to the longitudinal axis. This emphasizes the independence of said torsional deflection. The elastomer support ring is primarily used to provide axial support for the core and outer sleeve - the elastomer support ring is the axial working elastomer part. At the core, the elastomer support ring can have a largest support diameter and/or at the outer sleeve can have a smallest support diameter. The largest support diameter is the largest support diameter present on the core. The smallest support diameter is the smallest support diameter present on the outer sleeve. The smallest support diameter on the outer sleeve can be equal to or smaller than the largest support diameter on said core. This results in an axial overlap of these support diameters. The greater this overlap, the more axially rigid the bush is.

As a truncated cone, the elastomer support ring can have a conical outer circumferential surface and/or a conical inner circumferential surface. An imaginary central cone is conceivable in the elastomer support ring's material in the middle between the outer circumferential surface of the elastomer support ring and the inner circumferential surface of the elastomer support ring. The imaginary central cone can define the central diameter of the elastomer support ring. Said outer circumferential surface can be aligned with an outermost support point of the elastomer support ring. Said inner circumferential surface can be aligned with an innermost support point of the elastomer support ring.

The elastomeric support ring or its imaginary central cone can form an angle with the longitudinal axis in the range of 40° to 70°, preferably 50° to 60°, even more preferably 55°. These dimensions have proved to be particularly advantageous in the sense of the invention.

The inner circumferential surface of the elastomeric support ring and/or the outer circumferential surface of the elastomeric support ring can be free surfaces. Both surfaces can be exposed to the environment, for example the air. The outside diameter of the elastomer support ring is defined by the outer circumferential surface of the elastomer support ring. The inside diameter of the elastomer support ring is defined by the inner circumferential surface of the elastomer support ring. As a truncated cone, the elastomer support ring's central diameter tapers along the longitudinal axis, preferably between said two support surfaces.

The elastomer support ring can be arranged in the elastomer bush in such a way that its axial end with a large diameter is supported in a longitudinal center or center area of the elastomer bush and its axial end with a small diameter is supported at the axial end of the elastomer bush. The elastomer support ring can taper towards one of the two axial ends of the elastomer bush.

The inner support surface can be formed on the outer circumference of the core. This enables a reduction in installation space and promotes compressive stress within the elastomer support ring. Rather than tensile stresses within the elastomer compressive stresses regularly promote the durability of elastomer bush. The inner support surface can extend around the longitudinal axis in the circumferential direction, preferably continuously or uninterrupted, and/or can be a ring surface. The inner support surface can be a conical surface. This provides better axial support and transmission of axial forces.

The outer support surface can be formed on the inner circumference of the outer sleeve. This enables a reduction in installation space and promotes compressive stress within the elastomer support ring. The outer support surface can extend around the longitudinal axis in the circumferential direction, preferably continuously or uninterrupted, and/or can be a ring surface. The outer support surface can be a conical surface. This provides good axial support and transmission of axial forces.

The inner support surface and the outer support surface are offset from each other along the longitudinal axis. This allows the elastomer support ring to stretch between them, in particular to extend in the longitudinal direction and expand in the radial direction and promotes compressive stress within the elastomer support ring. The support surface can simply be the surface against which the elastomer support ring is supported.

The elastomer body can be in one piece. The elastomer body can be connected to the core and the outer sleeve by a material-fit, preferably by vulcanization. Said material-fit also serves to ensure a secure connection in the event of torsional deflection. The elastomer support ring can be connected to its supporting surfaces by a material-fit, preferably by vulcanization. Said material-fit also serves to ensure a secure connection in the event of torsional deflection.

The core can have a blind hole or a through hole along the longitudinal axis. A fastening element, such as a screw, can engage in/through the respective hole. The core can be designed as a single piece, preferably monolithic, whereby this serves to reduce the size of the component and optimize the distribution of forces by reducing the number of component joints. The core may have an axial end face at one of its longitudinal ends and an axial end face at its opposite longitudinal end.

The core can form two portions. A first portion can be a shaft portion. The shaft portion may be cylindrical and/or extend over more than 50% of the longitudinal length of the core, preferably over more than 70%, and/or have an outside diameter, preferably a continuously constant outside diameter along the longitudinal axis. One of the axial end faces of the core can be formed by the shaft portion. In particular, the shaft portion can be used to arrange elastomer support arms that extend in the radial direction between the core and outer sleeve and can connect said core and sleeve elastically. Such elastomer support arms in particular require a slim core.

The elastomer support arms can be connected to their supporting surfaces by a material-fit, preferably by vulcanization. Said material-fit also serves to ensure a secure connection in the event of torsional deflection.

A second portion can be a head portion. The shaft portion and the head portion can be directly adjacent to each other in the longitudinal direction. The head portion may be the axial end of the core. Thus, the head portion can serve to interact with other components. The head portion may extend over less than 50% of the longitudinal length of the core, preferably less than 30%, and/or have a largest outside diameter which is larger than the largest outside diameter of the shaft portion. This allows the head portion to offer larger installation space to other components. One of the axial end faces of the core can be formed by the head portion.

Said outer sleeve may have an (first) axial end face at one of its longitudinal ends and an (second) axial end face at its opposite longitudinal end.

The elastomer bush can have a transverse center plane. The longitudinal axis can be arranged perpendicular to said transverse center plane. The circumferential direction extends around the longitudinal axis. The longitudinal axis extends through the core in its longitudinal direction. The core can be an inner sleeve. The radial direction extends at right angles from the longitudinal axis.

According to an optional embodiment the core has, preferably forms, an inner support flange on its outer circumference, against which the support ring is supported. The inner support flange extends radially outward from the core. This allows the core to form a good support surface for the elastomer support ring. Said inner support flange may be formed by said head portion. Said inner support flange can extend around the longitudinal axis in the circumferential direction, preferably continuously or uninterrupted, and/or can be a ring flange. Said inner support flange may form the inner support surface, preferably only the inner support flange. It is technically possible that the inner support surface extends beyond the inner support flange and that the elastomer support ring is also supported against the shaft section, for example. The principle is that the ring is supported somewhere on the inside.

According to another optional embodiment, said inner support surface and/or said inner support flange may be tapered along the longitudinal axis. This provides good axial support and transmission of axial forces.

According to another optional embodiment, said inner support surface and/or said inner support flange and/or said head portion and/or a recess may be located in the space inside the outer sleeve. This creates a compact length of the core, which also results in a smaller installation space requirement for the core/ fastening element package.

According to an optional embodiment the inner support flange is arranged at an axial end of the core, preferably formed by said head portion. This leaves installation space in the elastomer bush between the core and outer sleeve. It also brings the inner support of the elastomer support ring into the axial end area of the elastomer bush.

According to another optional embodiment, said core can be an axial end stand back core. The core can therefore stand back longitudinally at one of its two axial ends in relation to the outer sleeve and/or the elastomer body. This creates a compact length of the core, which also results in a smaller installation space requirement for the core/ fastening element package. The following specific embodiment can specify said mentioned general embodiment in more detail.

According to an optional embodiment an axial end face of the core and/or the inner support flange and/or the head portion is set back by a distance from the axial end face of the outer sleeve along the longitudinal axis. This results in a shorter component that requires less installation space. The respective part or axial end of the core is therefore arranged in the space inside the outer sleeve. The axial end of the core, on which the axial end face and/or the inner support flange and/or the head portion is/are formed, is therefore set back relative to the corresponding axial end of the outer sleeve or does not protrude axially from the outer sleeve. The axial end face of the outer sleeve can be the first axial end face of the outer sleeve.

Set back means that the aforementioned parts of the core are arranged in the longitudinal direction closer to a transverse center plane of the elastomer bush than the axial end face of the outer sleeve.

According to another optional embodiment, said core can be an axial end protruding core. The core can therefore protrude longitudinally at one of its two axial ends in relation to the outer sleeve and/or the elastomer body. The core can be both: an axial end stands back core and an axial end protruding core. The core can stand back with one of its axial ends and can protrude with the other one of its axial ends. By changing the length of the core it can be adopted to its position in respect to its interface.

According to an optional embodiment the inner support flange and/or said head portion forms a recess in the axial end of said core. The recess can be shell-shaped. The recess can lead into the blind hole or through hole. The recess can be a screw head recess. A screw head (fastening element) can be arranged in the recess. This creates a compact length of the core, which also results in a smaller installation space requirement for the core/ fastening element package. Another advantage of the recess is that a fastening element can be countersunk into the core and does not have to rest against a small end face. This makes it much more compact.

According to another optional embodiment, the diameter of the recess can be larger than the largest outside diameter of the shaft portion. This can further emphasize the task distribution of the core: The large-diameter head portion is used for attaching the elastomer ring and/or the arrangement of a fastening element, while the small-diameter shaft portion is used for attaching the elastomer support arms in order to have sufficient radial extension.

According to an optional embodiment said recess forms a fastener contact surface, wherein said fastener contact surface is set back along the longitudinal axis by a distance from a radially outermost support point of the elastomer support ring at the core and/or from the axial end point of the elastomer support ring. The fastener contact surface can be aligned with the inner support surface in the radial direction. Hence, a seat for a screw (fastening element) can be located even further inside of said elastomer bush than most lower starting point of said elastomer support ring. This makes it much more compact. Set back means that the fastener contact surface is arranged in the longitudinal direction closer to the transverse center plane of the elastomer bush than the outermost support point. On the core, the elastomer support ring has its largest outside diameter at the outermost support point. The outermost support point can be located at the inner support surface. The outermost support point can be located at the largest support diameter of the elastomer support ring on the core side. The elastomer support ring may well have an even larger outside diameter at another point (not on the core).

According to an optional embodiment the outer sleeve has, preferably forms, an outer support flange on its inner circumference, against which the elastomer support ring is supported. The outer support flange extends radially inward from the outer sleeve. This allows the outer sleeve to form a good support surface for the elastomer support ring. Said outer support flange may be formed in the middle third of the elastomer bush length. Said outer support flange can extend around the longitudinal axis in the circumferential direction, preferably continuously or uninterrupted, and/or can be a ring flange. Said outer support flange may form the outer support surface, preferably only the outer support flange. It is technically possible that the outer support surface extends beyond the outer support flange. The principle is that the ring is supported somewhere on the outside.

According to another optional embodiment, said outer support surface and/or said outer support flange may be tapered along the longitudinal axis. This provides good axial support and transmission of axial forces.

According to another optional embodiment, said outer support flange can be wedge-shaped in longitudinal section. As a result, the outer support flange can have a first outer flange surface that faces in one axial direction and a second outer flange surface that faces in the opposite axial direction. One of the outer flange surfaces can be the outer support surface for the elastomer support ring. The other outer flange surface can support the elastomer support arms. This allows the elastomer support ring to be supported in one axial direction and the elastomer support arms to be supported in the opposite axial direction, whereby only a single support (outer support flange) is required here.

According to an optional embodiment a first axial length of the outer sleeve is equal to or less than a second axial length of the outer sleeve,
the first axial length extending parallel along the longitudinal axis between a minimum inside diameter of the outer support flange or a point at said minimum inside diameter and an axial end face (second end face) of the outer sleeve, and
the second axial length extending parallel along the longitudinal axis between said minimum inside diameter of the outer support flange or said point at said minimum inside diameter and the opposite axial end face (first end face) of the outer sleeve,
the elastomer support ring and/or the outer support surface and/or the head portion being arranged within the second axial length. The axially supporting elastomer support ring can therefore be positioned far in the center of the elastomer bush. This means that the head portion can also be arranged in the space inside the outer sleeve and at the same time sufficient axial extension of the elastomer support ring can be achieved. The total axial length of the outer sleeve can be the sum of the first axial length and the second axial length. On the outer sleeve, the elastomer support ring has its smallest inside diameter at the innermost support point. The innermost support point can be located at the outer support surface. The innermost support point can be located at the smallest support diameter of the elastomer support ring on the sleeve side. The elastomer support ring may well have an even smaller inside diameter at another point (not on the outer sleeve).

According to an optional embodiment the inner support surface and the outer support surface are parallel to each other when viewed in longitudinal section, preferably with the elastomer support ring or the imaginary central cone extending perpendicular to each of said two support surfaces. Both of the support surfaces are tapered and aligned in the same direction, with the elastomer support ring arranged in between. Hence, this embodiment can be loaded with high axial preloads while maintaining a long service life.

According to another optional embodiment said inner support surface and said outer support surface overlap or almost overlap in the longitudinal direction. Said outermost support point and said innermost support point can have a radial distance to each other. The closer said outermost support point and said innermost support point are in respect to a radial distance to each other the more progressive is the axial stiffness curve and thus the ability of the elastomer bush to endure high axial loads.

According to an optional embodiment the elastomer body forms at least two, preferably four, elastomer support arms which are supported on their inner circumference at the core and on their outer circumference at the outer sleeve. Said elastomer support arms elastically connecting said core and said outer sleeve to each other. Said arms can be ribs.

The elastomer support arms being bar-type connection between the core and outer sleeve enable high radial stiffness. Furthermore, as the arms can have a large axial length, they can achieve a relatively high increase in radial stiffness while there is a minor influence on the torsional stiffness.

The elastomer support arms can be continuous or uninterrupted in the axial direction along the longitudinal axis. The elastomer support arms can be arranged equidistantly around the longitudinal axis to achieve a uniform effect. The elastomer support arms are primarily used to provide additional radial support for the core and outer sleeve - the elastomer support arms are the dominating radial working elastomer part. In case the elastomer support ring and the elastomer support arms are present, the aforementioned separation of functions can be achieved: The good adaptability in the radial direction is retained by separating the functions of the axial working and radial working elastomer parts. This is due to the fact that tensile and compressive deflections dominate the stiffness over shear deflections of the rubber; tensile and compressive deflections dominate at axial deflections of the elastomer support ring while tensile and compressive deflections dominate at radial deflections of the elastomer support arms. Especially with the presence of the elastomer support ring and the elastomer support arms, the ratio between axial stiffness and radial stiffness can easily be taylored. As an arm, each of the elastomer support arms can have two opposite outer surfaces. Said outer surfaces can be free surfaces.

The disclosure also includes an embodiment, in which the elastomeric support ring is replaced by the elastomeric support arms. The elastomeric support ring is then optional for this embodiment.

According to another optional embodiment, said elastomer support arms are supported on their inner circumference at the shaft portion, preferably only at the shaft portion. Concentrating the fastening on the inner circumference enables arms that are as radially long as possible, as the shaft portion can be kept narrow and long, especially if the head portion exists.

According to another optional embodiment, each of the elastomer support arms extends on their inner circumference in the axial direction beyond an axial end of the outer sleeve and/or an axial end the elastomer body. Because the elastomer support arms protrude from the interior of the elastomer bush, very axially long arms can be formed, which can further increase the radial rigidity. Advantageously, the elastomer support arms are supported by the outer support flange in a direction, opposite the elastomer support ring. This means that when the elastomer bush is axially loaded in a direction that lead to tensile stress in the elastomer support ring the elastomer support arms help to reduce damages the elastomer material.

According to another optional embodiment, said elastomer support arms are supported on their outer circumference at a flange-free inner circumferential surface of the outer sleeve and/or a cylindrical inner circumferential surface of the outer sleeve and/or the outer support flange and/or the elastomer support ring. Preferably, the elastomer support arms are only supported by this. In case the elastomer support arms are supported on the outer support flange, the elastomer arms can be supported on the outer flange surface. This can further increase the axial stiffness, at least in a state without torsional deflection. In case that the elastomer body is in one piece and has the elastomer support ring and also the elastomer support arms, the support arms can merge into the support ring in the same material.

According to another optional embodiment, each of the elastomer arms can have a material thickness in the circumferential direction that is at most equal to the outside diameter of the core, preferably at most equal to the outside diameter of the shaft section. The elastomer arms can then also lead to a certain degree of stiffening in the event of relative rotational movement between the core and outer sleeve.

According to another optional embodiment, the inner support flange and/or the head portion can be free of elastomeric radial arms. The inner support flange and/or the head portion do not support an elastomeric radial arm. In this case the inner support flange and/or the head portion has the function of accommodating the head of a fastening element like a screw.

According to an optional embodiment the axial end faces of the elastomer support arms are tilted by an angle with respect to the longitudinal axis, preferably the angle is in the range of 85° to 45°, more preferably 70°. Said tilted axial end faces are not only beneficial for tuning radial stiffness, but also for an increased axial stiffness. Furthermore, this geometric feature reduces the strain on the surface at the axial end faces.

According to an optional embodiment
- said core has an outside diameter, preferably at its shaft portion, which is in the range of 0.25 times to 0.5 times the outside diameter of the outer sleeve, and/or
- said inner support flange and/or said head portion has a maximum outside diameter which is in the range of 0.5 times to 0.75 times the outside diameter of the outer sleeve, and/or
- the outer support flange has a minimum inside diameter that is in the range of 0.4 to 0.8 times the outside diameter of the outer sleeve.

These ratios have proven to be very suitable for arranging the elastomer body disclosed herein and thereby realizing the advantages according to the disclosure. Preferably, the outside diameter of the outer sleeve refers to the outer diameter of the bushing or the outer circumferential surface of the bushing over which the bushing is fastened in the radial direction, for example by pressing. It is conceivable that the outside diameter of the outer sleeve does not refer to a radially projecting collar that is attached to the outer sleeve.

Overall, a very advantageous elastomer bush is disclosed, which at the same time:
- is compact, because the core can stand back,
- can provide a large axial contact surface for a screw, because the core can have the recess, which can also stand back,
- can contain an elastomer body that leads to excellent rigidity due to the elastomer ring
- but can still have a slender and sufficiently long core for the elastomer arms.

Further features, details and advantages of the invention are apparent from the wording of the claims and from the following description of embodiments with reference to the drawings. The drawings show:
- Fig. 1: a top view on a elastomer bush along arrow I from Fig. 2,
- Fig. 2: a longitudinal cross section along line II-II from Fig. 1,
- Fig. 3: a longitudinal cross section along line III-III from Fig. 1 and
- Fig. 4: an elastomer body and a core in solo view.

In the figures, identical or corresponding elements are each designated with the same reference signs and are therefore not described again unless appropriate. Features already described are not described again in order to avoid repetition and are applicable to all elements with the same or corresponding reference signs, unless explicitly excluded. The disclosures contained in the entire description can be applied mutatis mutandis to identical parts with identical reference signs or identical component designations. The position details in the description, such as top, bottom, side, etc., also refer to the directly described and illustrated figure and are to be transferred analogously to the new position if the position is changed. Furthermore, individual features or combinations of features from the different embodiments shown and described can also represent independent, inventive solutions or solutions according to the invention.

A radial direction R extends perpendicular to a longitudinal axis A. A circumferential direction U extends around the longitudinal axis A and a transverse center plane Q is arranged in such a way that its normal vector lies on the central longitudinal axis A.

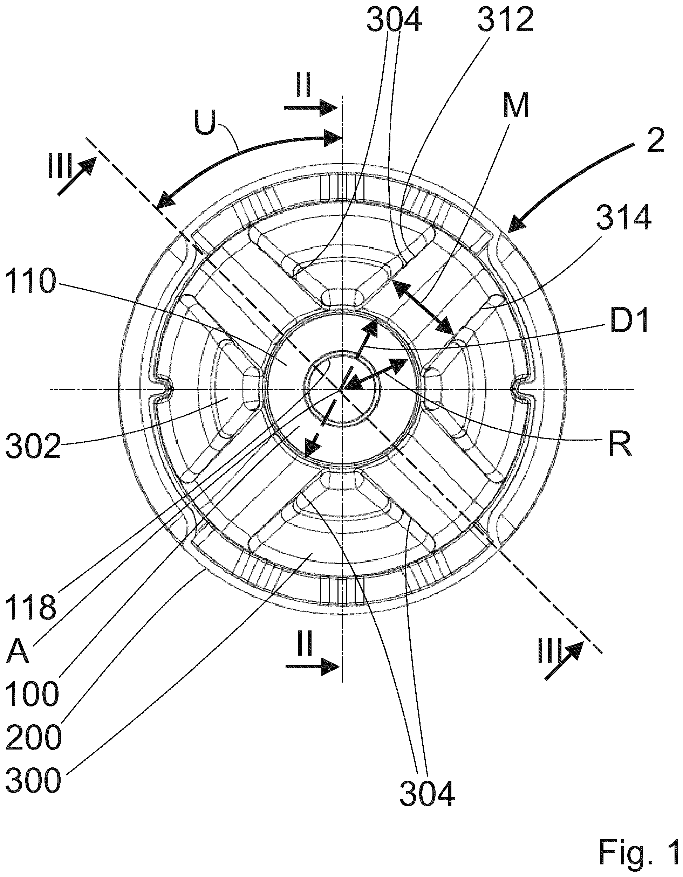

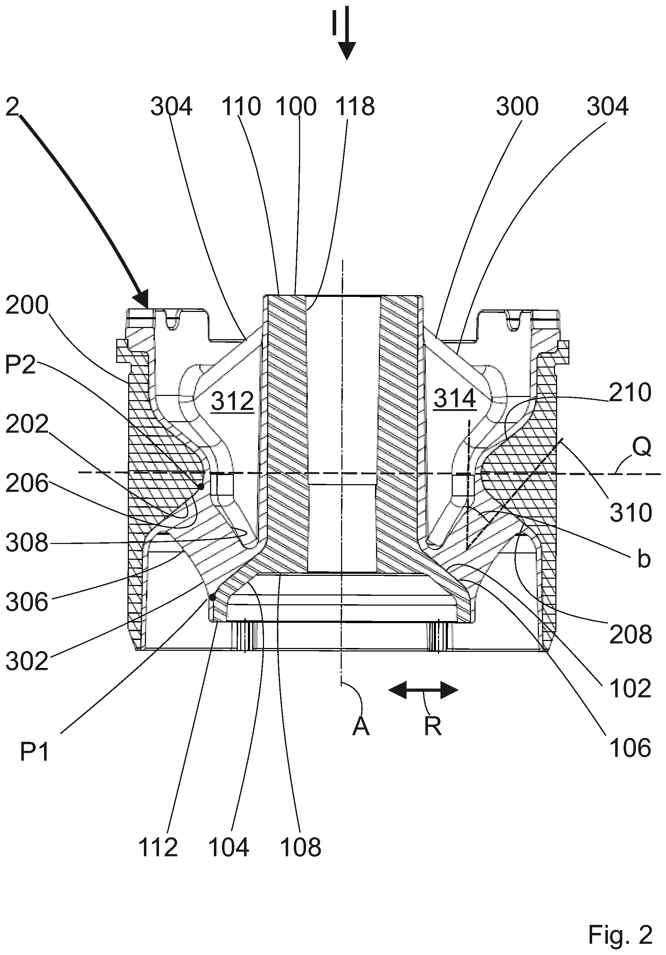

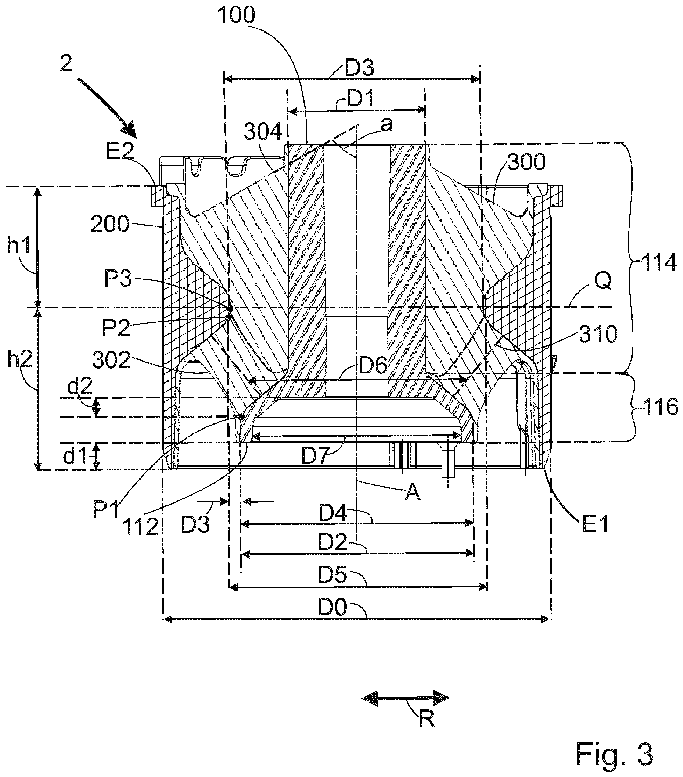

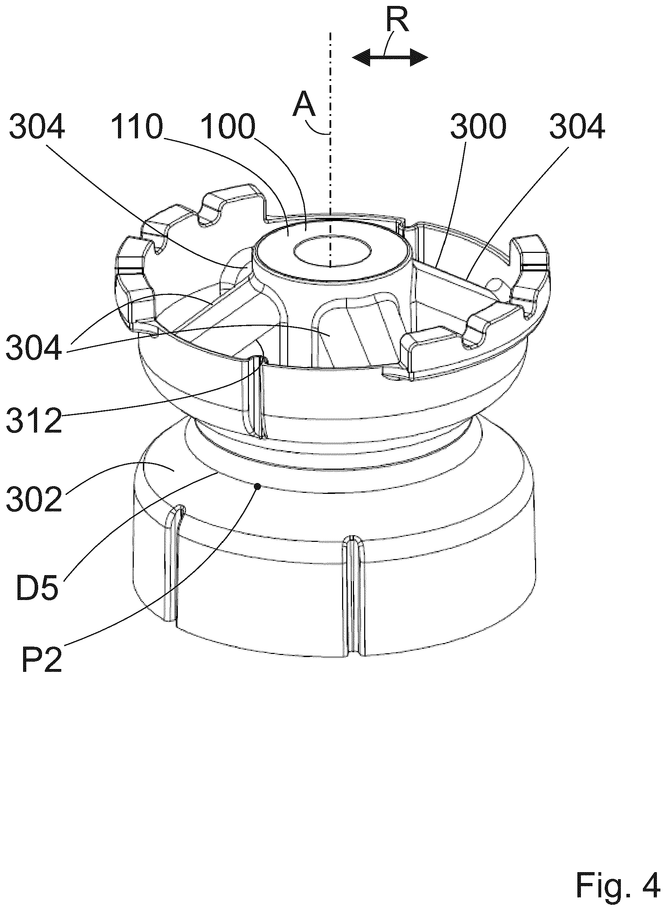

**Figures 1 to 4** depict a single elastomer bush 2 and its components in different views. Figure 2 primarily shows components, while figure 3 primarily shows dimensions and spatial relationships. However, the respective reference signs can be transferred to the respective other figure and are not also contained in the respective other figure due to visual detectability.

Said elastomer bush 2 comprises said longitudinal axis A and a core 100, the longitudinal axis A extending through the core 100 in its longitudinal direction. Said elastomer bush 2 comprises an outer sleeve 200 surrounding said core 100 and an elastomer body 300 arranged between said core 100 and said sleeve 200 and elastically connecting said core 100 and said sleeve 200 to each other. The elastomer body 300 forms an elastomer support ring 302 which is supported on its inner circumference at an inner support surface 106 of the core 100 and on its outer circumference at an outer support surface 206 of the outer sleeve 200. Said elastomer support ring 302 is a hollow truncated cone.

The elastomer support ring 302 is continuous in the circumferential direction U. At the core 100, the elastomer support ring 302 has a largest support diameter D4 and at the outer sleeve 200 has a smallest support diameter D5. The elastomer support ring 302 has a conical outer circumferential surface 306 and a conical inner circumferential surface 308.

An imaginary central cone 310 is conceivable in the elastomer support ring's material in the middle between the outer circumferential surface 306 and the inner circumferential surface 308. The imaginary central cone 310 defines a central diameter D6 of the elastomer support ring 302. Said central diameter D6 tapers along the longitudinal axis A. Both of the inner circumferential surface 306 and the outer circumferential surface 308 are free surfaces.

The elastomer support ring 302 is arranged in the elastomer bush 2 in such a way that its axial end with a large diameter is supported in a longitudinal center area of the elastomer bush 2 and its axial end with a small diameter is supported at the axial end of the elastomer bush 2. Hence, the elastomer support ring 302 tapers towards one of the two axial ends of the elastomer bush 2. The elastomeric support ring 302 or its imaginary central cone 310 forms an angle b with the longitudinal axis A.

The inner support surface 106 is formed on the outer circumference of the core 100. The inner support surface 106 extends around the longitudinal axis A in the circumferential direction U continuously and is a conical surface. The outer support surface 206 is formed on the inner circumference of the outer sleeve 200 and extends around the longitudinal axis A in the circumferential direction U continuously. The outer support surface 206 is a conical surface as well. The inner support surface 106 and the outer support surface 206 are offset from each other along the longitudinal axis A.

The elastomer body 300 is in one piece and connected to the core 100 and the outer sleeve 200 by a material-fit.

The core 100 has a through hole 118 extending along the longitudinal axis A. A fastening element, such as a screw, can engage through the through hole 118. The core 100 is designed as a single piece, wherein said core 100 has an axial end face 110 at one of its longitudinal ends and an axial end face 112 at its opposite longitudinal end.

Said core 100 forms two portions. A first portion is a shaft portion 114. The shaft portion 114 is cylindrical and extends over more than 50% of the longitudinal length of the core 100 and has an outside diameter D1 being continuously constant along the longitudinal axis A. One end face 110 is formed by the shaft portion 114.

A second portion can be a head portion 116. The shaft portion 114 and the head portion 116 are directly adjacent to each other in the longitudinal direction. The head portion 116 is the axial end of the core 100. The head portion extends over less than 50% of the longitudinal length of the core 100 and has a largest outer diameter D2 which is larger than the largest outer diameter D1 of the shaft portion 114. The other axial end face 112 of the core 100 is formed by the head portion 116.

Said core 100 forms an inner support flange 102 on its outer circumference. Said elastomer support ring 302 is supported against said inner support flange 102. The inner support flange 102 extends radially outward from the core 100 and is formed by said head portion 116. Said inner support flange 102 extends around the longitudinal axis A in the circumferential direction U continuously and is a ring flange. Only said inner support flange 102 forms the inner support surface 106. Said inner support surface 106 and said inner support flange 102 are tapered along the longitudinal axis A. The inner support flange 102 is arranged at an axial end of the core 100.

Said core 100 is an axial end stand back core. The core 100 stands back longitudinally at one of its two axial ends in relation to the outer sleeve 200. Said axial end face 112 of the core 100 and the inner support flange 102 are set back by a distance d1 from the first axial end face E1 of the outer sleeve 200 along the longitudinal axis A. The respective part or axial end of the core 100 is therefore arranged in the space inside the outer sleeve 200. The axial end of the core 100, on which the axial end face 112 and the inner support flange 102 and the head portion 106 are formed, is therefore set back relative to the corresponding axial end of the outer sleeve 200 and do not protrude axially from the outer sleeve 200. Said core 100 is an axial end protruding core. The core 100 protrudes longitudinally at its other axial end in relation to the outer sleeve 200 and/or the elastomer body 300.

The inner support flange 102 forms a shell-shaped recess 104 in the axial end of said core 100. The recess 104 leads into the through hole 118 and is a screw head recess. The diameter D7 of the recess 104 is larger than the (largest) outside diameter D1 of the shaft portion 114.

Said recess 104 forms a fastener contact surface 108, wherein said fastener contact surface 108 is set back along the longitudinal axis A by a distance d2 from a radially outermost support point P1 of the elastomer support ring 302 at the core 100. The fastener contact surface 108 is aligned with the inner support surface 106 in the radial direction R.

On the core, the elastomer support ring 302 has its largest outer diameter at the outermost support point P1. The outermost support point P1 is located at the inner support surface 106 and at the largest support diameter D4 of the elastomer support ring 302 on the core side.

The outer sleeve 200 forms an outer support flange 202 on its inner circumference, against which the elastomer support ring 302 is supported.

The outer support flange 202 extends radially inward from the outer sleeve 200. Said outer support flange 200 is formed in the middle third of the elastomer bush's length. Said middle third can define said center area. Said outer support flange 202 extends around the longitudinal axis A in the circumferential direction U continuously and is a ring flange. Said outer support flange 202 forms part the outer support surface 206. Said outer support surface 206 and said outer support flange 202 are tapered along the longitudinal axis A.

Said outer support flange 202 is wedge-shaped in longitudinal section. Hence, the outer support flange 202 has a first outer flange surface 208 that faces in one axial direction and a second outer flange surface 210 that faces in the opposite axial direction. One of the outer flange surfaces 208 is the outer support surface 206 used for supporting the elastomer support ring 302. The other outer flange surface 210 supports four elastomer support arms 304, that will be described later.

Said outer sleeve 200 has a total axial length (h1+h2). A first axial length h1 of the outer sleeve 200 is equal to or less than a second axial length h2 of the outer sleeve 200. Said first axial length h1 extending parallel along the longitudinal axis A between a minimum inside diameter D3 of the outer support flange 202 or a point P3 at said minimum inside diameter D3 and a second axial end face E2 of the outer sleeve 200. The second axial length h2 extending parallel along the longitudinal axis A between said minimum inside diameter D3 of the outer support flange 202 or said point P3 at said minimum inside diameter D3 and the opposite first axial end face E1 of the outer sleeve 200. As can be seen, said elastomer support ring 302 and the outer support surface 206 being arranged within the second axial length h2. On the outer sleeve 200, the elastomer support ring 302 has its smallest inner diameter at an innermost support point P2. The innermost support point P2 is located at the outer support surface 206. The innermost support point P2 is located at the smallest support diameter D5 of the elastomer support ring 302 on the sleeve side.

The inner support surface 106 and the outer support surface 206 are parallel to each other when viewed in longitudinal section. The elastomer support ring 302 and the imaginary central cone 310 extending perpendicular to each of said two support surfaces 106, 206.

Said inner support surface 106 and said outer support surface 206 do not overlap in the longitudinal direction. In other word, said outermost support point P1 and said innermost support point P2 have a radial distance d3 to each other. Said outer circumferential surface 306 is aligned with said outermost support point P1. Said inner circumferential surface 308 is aligned with said innermost support point P2.

The elastomer body 300 forms said four elastomer support arms 304 which are supported on their inner circumference at the core 100, especially only at its shaft portion 114. Said elastomer support arms 304 are supported on their outer circumference at a flange-free and cylindrical inner circumferential surface of the outer sleeve 200 and at the outer support flange 206 and at the elastomer support ring 302. As the elastomer body 300 is in one piece and has the elastomer support ring 302 as well as the elastomer support arms 304, the support arms merge into the support ring 302 in the same material, as indicated by dashed lines in fig. 3. Said elastomer support arms 304 elastically connecting said core 100 and said outer sleeve 200 to each other.

In the embodiment shown in Figures 1 to 4, the elastomeric support ring 302 and the elastomeric support arms 304 are also to be understood as substitutes, alternatives or also as additions to one another.

The elastomer support arms 304 are continuous in the axial direction along the longitudinal axis A. The elastomer support arms 304 are arranged equidistantly around the longitudinal axis A. As an arm, each of the elastomer support arms 304 can have two opposite outer surfaces 312, 314. Said outer surfaces 312, 314 can be free surfaces.

Each of the elastomer support arms 304 extends on their inner circumference in the axial direction A beyond an axial end of the outer sleeve 200. The elastomer support arms 304 are supported by the outer support flange 202 in a direction, opposite the support of the elastomer support ring 302.

Each of the elastomer arms has a material thickness M in the circumferential direction U that is at most equal to the outer diameter of the core 100, preferably at most equal to the outer diameter D1 of the shaft section 114. The inner support flange 102 and the head portion 116 are free of said elastomeric radial arms 304. The axial end faces of the elastomer support arms 304 are tilted by an angle a with respect to the longitudinal axis A.

Said core 100 has its outside diameter D1 in the range of 0.25 times to 0.5 times an outside diameter D0 of the outer sleeve 200. Said inner support flange 102 has its outside diameter D2 in the range of 0.5 times to 0.75 times the outside diameter D0 of the outer sleeve 200. The outer support flange 202 has its inside diameter D3 in the range of 0.4 to 0.8 times the outside diameter D0 of the outer sleeve 200.

The invention is not limited to one of the embodiments described above but can be modified in many different ways. All features and advantages resulting from the claims, the description and the drawing, including design details, spatial arrangements and process steps, can be essential to the invention both individually and in a wide variety of combinations. All combinations of at least two of the features disclosed in the description, the claims and/or the figures fall within the scope of the invention. In order to avoid repetition, features disclosed according to the device should also be regarded as disclosed according to the method and be claimable. Likewise, features disclosed according to the method should be considered to be disclosed according to the device and be claimable.

### Reference list

| | | | |
|---|---|---|---|
| 2 | elastomer bush | A | longitudinal axis |
| | | a | angle |
| 100 | core | b | angle |
| 102 | inner support flange | D0 | outside diameter |
| 104 | recess | D1 | outside diameter |
| 106 | inner support surface | D2 | outside diameter |
| 108 | fastener contact surface | D3 | inside diameter |
| 110 | axial end face | D4 | largest support diameter |
| 112 | axial end face | D5 | smallest support diameter |
| 114 | shaft portion | D6 | central diameter |
| 116 | head portion | D7 | recess diameter |
| 118 | through hole | d1 | distance |
| | | d2 | distance |
| 200 | outer sleeve | d3 | distance |
| 202 | outer support flange | E1 | first end face |
| 206 | outer support surface | E2 | second end face |
| 208 | first outer flange surface | h1 | first axial length |
| 210 | second outer flange surface | h2 | second axial length |
| | | M | material thickness |
| 300 | elastomer body | P1 | outermost support point |
| 302 | elastomer support ring | P2 | innermost support point |
| 304 | elastomer support arm | P3 | point |
| 306 | outer circumferential surface | Q | transverse center plane |
| 308 | inner circumferential surface | R | radial direction |
| 310 | imaginary central cone | U | circumferential direction |
| 312 | outer surface | | |
| 314 | outer surface | | |

## Claims

1. Elastomer bush (2) comprising
- a longitudinal axis (A),
- a core (100),
- an outer sleeve (200) surrounding said core (100) and
- an elastomer body (300) arranged between said core (100) and said sleeve (200) and elastically connecting said core (100) and said sleeve (200) to each other,
- wherein the elastomer body (300) forms an elastomer support ring (302) which is supported on its inner circumference at an inner support surface (106) of the core (100) and on its outer circumference at an outer support surface (206) of the outer sleeve (200),
- wherein the elastomer support ring (302) is a hollow truncated cone.

2. Elastomer bush (2) according to claim 1, **characterized in that** the core (100) has, preferably forms, an inner support flange (102) on its outer circumference, against which the elastomer support ring (302) is supported.

3. Elastomer bush (2) according to claim 2, **characterized in that** the inner support flange (102) is arranged at an axial end of the core (100).

4. Elastomer bush (2) according to claim 2 or 3, **characterized in that** an axial end face (110) of the core (100) and/or the inner support flange (102) is set back by a distance (d1) from the axial end face (E1) of the outer sleeve (200) along the longitudinal axis (A).

5. Elastomer bush (2) according to any one of claims 2 to 4, **characterized in that** the inner support flange (102) forms a recess (104) in the axial end of said core (100).

6. Elastomer bush (2) according to claim 5, **characterized in that** said recess (104) forms a fastener contact surface (108), wherein said fastener contact surface (108) is set back along the longitudinal axis (A) by a distance (d2) from a radially outermost support point (P1) of the elastomer support ring (302) at the core (100).

7. Elastomer bush (2) according to any one of the preceding claims, **characterized in that** the outer sleeve (200) has, preferably forms, an outer support flange (202) on its inner circumference, against which the elastomer support ring (302) is supported.

8. Elastomer bush (2) according to any one of the preceding claims, **characterized in that**
- a first axial length (h1) of the outer sleeve (200) is equal to or less than a second axial length (h2) of the outer sleeve (200),
- the first axial length (h1) extending parallel along the longitudinal axis (A) between a minimum inside diameter (D3) of the outer support flange (202) or a point (P3) at said minimum inside diameter (D3) and an axial end face (E2) of the outer sleeve (200), and
- the second axial length (h2) extending parallel along the longitudinal axis (A) between said minimum inside diameter (D3) or said point (P3) at said minimum inside diameter (D3) and the opposite axial end face (E1) of the outer sleeve (200),
- the elastomer support ring (302) and/or the outer support surface (206) being arranged within the second axial length (h2).

9. Elastomer bush (2) according to any one of the preceding claims, **characterized in that** the inner support surface (106) and the outer support surface (206) are parallel to each other when viewed in longitudinal section, preferably with the elastomer support ring (302) extending perpendicular to each of said two support surfaces (106, 206).

10. Elastomer bush (2) according to any one of the preceding claims, **characterized in that** the elastomer body (300) forms at least two, preferably four, elastomer support arms (304) which are supported on their inner circumference at the core (100) and on their outer circumference at the outer sleeve (200).

11. Elastomer bush (2) according to claim 10, **characterized in that** the axial end faces of the elastomer support arms (304) are tilted by an angle (a) with respect to the longitudinal axis (A), preferably the angle (a) is in the range of 85° to 45°, more preferably 70°.

12. Elastomer bush (2) according to any one of the preceding claims, **characterized in that**
- said core (100) has an outside diameter (D1) which is in the range of 0.25 times to 0.5 times the outside diameter (D0) of the outer sleeve (200), preferably at its shaft portion (114), and/or
- said inner support flange (102) has a maximum outside diameter (D2) which is in the range of 0.5 times to 0.75 times the outside diameter (D0) of the outer sleeve (200), and/or
- the outer support flange (202) has a minimum inside diameter (D3) that is in the range of 0.4 to 0.8 times the outside diameter (D0) of the outer sleeve (200).
